# EUROPÄISCHE PATENTSCHRIFT

(11) **EP 0 670 674 B1**
(45) Veröffentlichungstag und Bekanntmachung des Hinweises auf die Patenterteilung: **22.04.1998**
(21) Anmeldenummer: 94928283.4
(22) Anmeldetag: 29.09.1994
(51) Int. Cl.: A01N 25/30, A01N 35/02, C11D 3/48

(54) **FLÄCHENDESINFEKTIONS- UND REINIGUNGSMITTEL**
DISINFECTING AND CLEANING AGENT FOR FLAT SURFACES
DESINFECTANT/NETTOYANT A USAGE SUPERFICIEL

(30) Priorität: 30.09.1993 DE 4333385
(43) Veröffentlichungstag der Anmeldung: 13.09.1995
(73) Patentinhaber: Sprügel, Friedrich, D-81825 München (DE); Eibofner, Eugen, D-88400 Biberach (DE)
(72) Erfinder: Sprügel, Friedrich, D-81825 München (DE); Eibofner, Eugen, D-88400 Biberach (DE)
(74) Vertreter: ter Meer, Nicolaus, Dipl.-Chem., Dr.
(86) Internationale Anmeldenummer: DE9401159
(87) Internationale Veröffentlichungsnummer: WO9508917

(56) Entgegenhaltungen:
- EP-A- 0 255 875
- EP-A- 0 426 986
- DE-A- 2 236 729
- DE-A- 3 503 848
- GB-A- 1 337 467
- GB-A- 1 487 811
- US-A- 3 528 924
- US-A- 4 302 348
- US-A- 4 469 614

## Beschreibung

Die vorliegende Erfindung betrifft ein Flächendesinfektions- und Reinigungsmittel, welches ein biozides Mittel, ein fluoraliphatisches Tensid und ein Lösungsmittel enthält.

Bei einer Vielzahl von dem Publikumsverkehr zugänglichen Bereichen, wie Verkehrsmitteln, Gaststätten und insbesondere Krankenhäuern, Heimen, Artzpraxen und dergleiche ist es erforderlich, jene Bereiche, mit denen die sich dort aufhaltenden Menschen in Kontakt kommen, von unerwünschten Mikroorganismen zu befreien. Hierfür werden Flächendesinfektionsmittel verwendet, die häufig auch mit Reinigungsmitteln kombiniert werden und beispielsweise niedrigmolekulare Akohole, wie Ethanol oder Propanol als biozides Mittel enthalten. Damit diese Alkohole ihre biozide Wirkung entfalten können, müssen sie in einer hohen Konzentration vorhanden sein, was zueiner Brandgefahr und dazu führen kann, daß die mit diesem Desinfektionsmittel behandelten Oberflächen beeinträchtigt werden, beispielsweise durch Herauslösung wichtiger Bestandteile, durch Verfärbung und dergleichen.

Aus der EP-A-0 384 126 ist ein solches versprühbares Flächendesinfektionsmittel auf Basis von niederen aliphatischen Akoholen und anionischen Tensiden bekannt, welches eine Mischung aus Methylalkohol und Isopropanol, anionische Tenside, ein Säuerungsmittel zur Einstellung eines pH-Wertes von 8 bis 12 und Wasser als Rest enthält. Diese Kombination soll ein bakterizid und fungizid schnell wirksames Mittel darstellen, welches einen guten Reinigungseffekt zeigt und bei dem gewollt niedrigen Alkoholgehalt eine gute Materialverträglichkeit, einen relativ hohen Flammpunkt aufweist, eine relativ rasche Abtrocknung ergibt und eine geringe Rückstandsbildung besitzt.

Die DE-A-39 14 827 beschreibt ein flüssiges Desinfektionsmittelkonzentrat, welches als biozides Mittel eine Aktivsauerstoffkomponente, nämlich Peroxymonoschwefelsäure und/oder deren Salze enthält, neben einer Tensidkomponente und Wasser sowie üblichen Zusatzstoffen.

Aus der GB-A-1 487 811 ist ein wässriges, gegebenenfalls verdünnbares Desinfektions- und Reinigungsmittel bekannt, daß als biozides Mittel eine quaternäre Ammoniumverbindung und ein kationisches fluoraliphatisches Tensid enthält und entweder einen stark sauren pH-Wert von 1 bis 2,5 oder einen stark alkalischen pH-Wert von 11,5 bis 13 aufweist.

Der Gegenstand der DE-A-2 236 729 sind wässrige Desinfektions- und Reinigungsmittel, welche neben einem fluoraliphatischen Aminoxid-Tensid eine Quelle für aktiven Sauerstoff oder aktives Chlor als biozides Mittel enthalten.

Die EP-A-0 426 986 offenbart eine Reinigungslösung, welche als schnellnetzendes Tensid ein Perfluoroctansulfonat enthält.

Der Gegenstand der US-A-3 528 924 sind Lösungen zum Reinigen von Kunststoffbehältern enthaltend ein fluoriertes Tensid und ein Erdalkalipermanganat als biozides Mittel.

Die US-A-4 469 614 beschreibt die Verwendung von Glutaraldehyd in Desinfektionsmitteln mit einem pH-Wert zwischen 2,5 und 7.

Aus der US-A-4 302 348 sind Reinigungsmittel für harte Oberflächen bekannt, welche ein organisches Lösungsmittel, ein Gemisch aus einem fluorhaltigen und einem fluorfreien anionischen oder nichtionischen Tensid enthalten.

Die GB-A-1 337 467 beschreibt ein wässriges Mittel mit verbesserten Netz- und Spreit-Eigenschaften auf organischen und anorganischen Oberflächen auf der Grundlage eines Gemisches von Tensiden, welches ein fluorhaltiges Tensid, wie Perfluoroctansäure, sowie Herbizide oder Fungizide enthält.

Gegenstand der DE-A-35 03 848 ist ein Desinfektionsmittel auf der Basis von Formaldehyd oder einem oder mehreren weiteren Aldehyden, wie beispielsweise Glyoxal, Succindialdehyd oder Glutaraldehyd, quaternären Amoniumverbindungen, Tensiden und Wasser.

Schließlich offenbart die EP-A-0 255 875 Sterilisierungsmittel auf der Grundlage von Glutaraldehyd, einem substituierten Phenol und einem nichtionischen Tensid.

Es hat sich gezeigt, daß mit den herkömmlichen Flächendesinfektions- und Reinigungsmitteln insbesondere dann Probleme auftreten, wenn Kunststoffoberflächen desinfiziert und gereinigt werden müssen. Eine besonders schwierige Situation ergibt sich in Arztpraxen und insbesondere Zahnarztpraxen, die wegen gesetzlicher Bestimmungen in weiten Bereichen desinfiziert werden müssen, insbesondere die Behandlungseinheit und die Möbel und Geräte. Bei der Oberflächendesinfektion von dentalen Behandlungseinheiten ergibt sich ein Problem dadurch, daß eine Vielzahl von verschiedenen Materialien Verwendung findet. Die verwendeten Polstermaterialien müssen zur Unterdrückung des Eindringens von Keimen eine geschlossenporige Oberfläche aufweisen und dabei in der Regel aus einem Intergralschaum bestehen, der auf einen Schaumstoffkern aufgeklebt ist. Beim Behandeln solcher Polstermaterialien mit einem alkoholhaltigen Desinfektionsmittel werden häufig die in dem Kunststoffmaterial enthaltenen Weichmacher, Farbstoffe und Stabilisatoren herausgelöst, was zur Folge hat, daß die häufig in Pastellfarben eingefärbten Oberflächenbezüge sehr schnell unansehnlich werden, sich verfärben oder Risse bilden.

Schwierigkeiten ergeben sich auch dadurch, daß bei den häufig aus Polycarbonat hergestellten Instrumententrägern die Desinfektionsmittel Risse und Verfärbungen verursachen, namentlich an schwierig zu erreichenden Hinterschneidungen, an denen sich eingesetzte Metallgewinde befinden. Dies hat zur Folge, daß aufgrund der ständigen Behandlung mit den Flächendesinfektionsmitteln nach kürzester Zeit Veränderungen der Oberflächen der behandelten Materialien auftreten, die weder von dem Personal noch von den Patienten hingenommen werden.

Die Aufgabe der vorliegenden Erfindung besteht nun darin, ein flächenwirksames Desinfektions- und Reinigungsmittel anzugeben, das eine starke Desinfektionswirkung gegen die üblicherweise anzutreffenden Keime entfaltet und bei hoher tensidischer Reinigungswirkung auch bei längerer Anwendung keine Veränderung, Verfärbung oder Zerstörung der behandelten Kunststoffoberflächen verursacht.

Es hat sich gezeigt, daß diese Aufgabe mit Hilfe eines Flächendesinfektions- und Reinigungsmittels gelöst werden kann, welches ein biozides Mittel, ein fluoraliphatisches Tensid und ein Lösungsmittel enthält.

Gegenstand der vorliegenden Erfindung ist daher das Flächendesinfektions- und Reinigungsmittel gemäß Hauptanspruch. Die Unteransprüche betreffen betreffen bevorzugte Ausführungsformen dieses Erfindungsgegenstandes.

Das erfindungsgemäße Flächendesinfektions- und Reinigungsmittel enthält enthält als wesentlichen Bestandteil mindestens eine Perfluoralkansäure mit 1 bis 10 Kohlenstoffatomen im Alkanrest und/oder ein Alkali- und/oder Ammoniumsalz davon als fluoraliphatisches Tensid. Dieses fluoraliphatische Tensid besitzt den besonderen Vorteil, daß es bei sehr geringer Konzentration auch bei schwierigen und mit Blut und Speichel verunreinigten Oberflächen, wie sie im Bereich von dentalen Behandlungsinstrumenten und -einheiten anzutreffen sind, eine nahezu perfekte Oberflächenbenetzung ermöglichen und die Wirkstoffe des Desinfektionsmittels in hervorragender Weise über die gesamte zu behandelnde Oberfläche verteilt.

Besonders bevorzugt als Perfluoralkansäuren sind Perfluoralkylcarbonsäuren und/oder Perfluoraklylsulfonsäuren, wie Perfluorbuttersäure, Trifluormethansulfonsäure und/oder Perflouroctansäure, welche Säuren vorzugsweise in Form von Alkalimetallsalzen, wie Kaliumsalzen oder Ammoniumsalzen eingesetzt werden.

Das erfindungsgemäße Mittel enthält dieses fluoraliphatische Tensid vorzugsweise in einer Konzentration von 0.001 bis 1 Gew.-% und noch bevorzugter in einer Konzentration von 0,01 bis 0,1 Gew.-% bezogen auf das tatsächlich angewandte Mittel, das heißt also das in der Anwendungskonzentration vorliegende Mittel.

Es hat sich gezeigt, daß das erfindungsgemäß verwendete fluoraliphatische Tensid gegen ultraviolette Strahlung stabil ist und die üblicherweise anzutreffenden Kunststoffmaterialien, namentlich Kunststoffbezugsmaterialien, Polycarbonat und Acrylharze nicht angreift und auch keine Spannungsrißkorrosion verursacht, wie es bei üblichen Flächendesinfektionsmitteln häufig der Fall ist. Die meisten marktüblichen Produkte, die Arylsulfonate, Fettalkoholpolyglykolether, quartäre Ammoniumsalze sowie Ethanolamine enthalten, führen bei längerer Behandlung von Polycarbonatoberflächen und Acrylharzoberflächen zu Rissen und Trübungen. Es hat sich nun überraschenderweise erwiesen, daß das erfindungsgemäß eingesetzte fluoraliphatische Tensid auch dann, wenn es in Kombination mit einem Hilfs-Tensid eingesetzt wird, auf das nachfolgend noch eingegangen werden wird, nicht zu solchen unerwünschten Veränderungen Anlaß gibt.

Das erfindungsgemäße Mittel enthalt als biozides Mittel Glyoxal und/oder Glutaraldehyd. Es hat sich gezeigt, daß diese Aldehyde im Gegensatz zu den üblicherweise eingesetzten quartären Ammoniumderivaten, Hemiformale, Aryl- und Phenylphenolen, Arylaminen und Guanidinen nicht zu einer zu Spannungsrißkorrosion bei Gegenständen aus harten Kunststoffmaterialien, wie Polycarbonat führen und auch nicht zu einer Verfärbung der Kunststoffe Anlaß geben, wenngleich diesbezüglich Glyoxal noch besser verträglich ist als Glutaraldehyd, so daß Glyoxal als biozides Mittel ganz besonders bevorzugt ist.

Das erfindungsgemäße Mittel enthalt als Lösungsmittel Wasser und/oder mindestens einen wasserlöslichen Alkohol, wie Ethanol, Propanol und/oder Isopropanol, wobei besonders bevorzugt eine Mischung aus destilliertem Wasser und Ethanol, Propanol oder Isopropanol oder Mischungen dieser Alkohole eingesetzt wird, insbesondere im Verhältnis von Wasser zu Alkohol beziehungsweise der Alkoholmischung von 20 : 80 bis 80 : 20.

Vorzugsweise enthält das erfindungsgemäße Flächendesinfektions- und Reinigungsmittel zusätzlich mindestens einen optischen Aufheller, wie ein Benzotriazolderivat und/oder ein Stilbendisulfonsäurederivat. Besonders bevorzugte optische Aufheller sind 2-(2H-Benzotriazol-2-yl)-4-methyl-6-dodecyl-phenol, ein Reaktionsprodukt aus 3-(3-(2H-Benzotriazol-2-yl)-5-tert.butyl-4-hydroxyphenyl)-propionsäuremethylester und Polyethylenglykol 300 und/oder ein Bis(4,4'-triazinylamino)-stilben-2,2'-disulfonsäurederivat (Uvitex BAM der Firma Ciba-Geigy AG).

Das erfindungsgemäße Mittel enthält diese optischen Aufheller, die insbesondere dazu dienen, nicht nur das Mittel ansehnlich zu halten, sondern auch ein helleres Aussehen der mit dem Mittel behandelten Oberflächen zu bewirken, vorzugsweise in einer Konzentration von 0,001 bis 3 Gew.-% und noch bevorzugter in einer Konzentration von 0,01 bis 0,5 Gew.-%, wobei es sich auch bei dieser Konzentration um die Anwendungskonzentration handelt.

Das erfindungsgemäße Flachendesinfektions- und Reinigungsmittel enthält zusatzlich mindestens einen UV-Absorber, beispielsweise einen UVA/UVB-Absorber oder auch nur einen UVA-Absorber, um in dieser Weise insbesondere bei der reinigenden Sprüh- und Wischdesinfektion von besonders empfindlichen Kunstledern der Alterung und Verfärbung vorzubeugen, indem der behandelten Oberfläche, aus der zwangsläufig darin enthaltene Wirkstoffe ausgelaugt worden sind, diese wieder zugeführt werden. Das erfindungsgemäß verwendete fluoraliphatische Tensid bewirkt, daß die oben angesprochenen optischen Aufheller und auch die UV-Absorber in Form eines äußerst dünnen Films auf der Oberfläche der behandelten Kunststoffmaterialien verbleiben und damit bei ständiger Behandlung eine Art Depoteffekt verursachen. In dieser Weise wird es möglich, die empfindlichen Kunststoffoberflächen über wesentlich längere Zeitdauern im praktisch ursprünglichen Zustand zu halten, was mit den bisher angewandten Flächendesinfektionsmitteln nicht zu erreichen war.

Erfindungsgemäß werden als UV-Absorber vorzugsweise p-Aminobenzoesäurederivate, Benzimidazolderivate, Benzophenonderivate, Benzoxazolderivate, Campherderivate, Cumarinderivate, Dibenzoylmethanderivate, Gallussäurederivate, o-Hydroxybenzoesäurederivate, Zimtsäurederivate und/oder p-Methoxyzimtsäurederivate verwendet, wobei besonders bevorzugt 2-Hydroxy-4-methoxy-benzophenon, 2,4-Dihydroxy-benzophenon und/oder 2-Hydroxy-4-methoxy-benzophenon-5-sulfonsäure eingesetzt werden.

Das erfindungsgemäße Mittel enthält diesen UV-Absorbervorzugsweise in einer Konzentration von 0,002 bis 5 Gew.-% und noch bevorzugter in einer Konzentration von 0.02 bis 1 Gew.-%, ebenfalls wieder aufdas letztlich angewandte Mittel bezogen.

Erfindungsgemäß ist es zur weiteren Verbesserung des Reinigungsmittels möglich, ohne Beeinträchtigung der Desinfektions- und Pflegewirkung zusätzlich mindestens ein nichtionisches oder anionisches Hilfs-Tensid zuzugeben, beispielsweise ein nichtionisches Hilfs-Tensid in Form eines Alkinols, eines Alkindiols und/oder eines Ethylenoxidderivats davon, wie beispielsweise 3,5-Dimethyl-1-hexin-3-ol und 2,4,7,9-Tetramethyl-5-decin-4,7-diol. Als anionisches Tensid können vorzugsweise Alkylsulfate oder Alkylsulfonate mit 8 bis 18 Kohlenstoffatomen im Alkylrest eingesetzt werden, die vorzugsweise in Form der Natrium- oder Ammoniumsalze verwendet werden. Dieses Hilfs-Tensid kann ohne Beeinträchtigung des angestrebten Desinfektions-, Reinigungs- und Pflege-Effekts in einer Menge vorhanden sein, die bis zum 5-fachen der Menge des fluoraliphatischen Tensids beträgt. Vorzugsweise ist dieses Hilfs-Tensid in einer Menge von 0,001 bis 5 Gew.-%, noch bevorzugter von 0,1 bis 2,0 Gew.-% enthalten.

Es ist natürlich weiterhin möglich, dem erfindungsgemäßen Flächendesinfektions- und Reinigungsmittel übliche Zusätze einzuverleiben, wie Korrosionsinhibitoren, Stabilisatoren, Farbstoffe, Parfumbestandteile und/oder Duftstoffe.

Das erfindungsgemäße Mittel besitzt in der Anwendungsform vorzugsweise einen pH-Wert von 2,5 bis 5,0, da sich im sauren Bereich die beste Desinfektionswirkung erreichen läßt. Mit Vorteil wird das erfindungsgemäße Mittel mit Ammoniak, Natriumhydroxid, Kaliumhydroxid, einem Morpholinderivat und/oder einem kurzkettigen Amin oder der Fluoralkansäure, die als fluoraliphatisches Tensid eingesetzt wird, auf einen pH-Wert von 3,0 bis 4,5 eingestellt.

Das erfindungsgemäße Mittel kann in der Anwendungsform vorliegen, wie es letztlich vom Verbraucher zur Desinfektion und Reinigung der zu behandelnden Oberflächen eingesetzt wird, kann je doch auch in die Form eines Konzentrats gebracht werden, welches vor der Verwendung mit dem oben angesprochenen Lösungsmittel, also beispielsweise destilliertem Wasser und/oder den niedrigmolekularen Alkoholen auf die Anwendungskonzentration verdünnt wird. Gegenstand der Erfindung ist daher auch ein Flächendesinfektions- und Reinigungsmittel, welches die oben angesprochenen Bestandteile enthält und in Form eines Konzentrats mit einer solchen erhöhten Konzentration vorliegt, daß sich nach dem Verdünnen mit dem Lösungsmittel die angegebenen Anwendungskonzentrationen ergeben.

Das erfindungsgemäße Flächendesinfektions- und Reinigungsmittel ist zum Desinfizieren in den unterschiedlichsten Bereichen geeignet, beispielsweise sind Flächen, Geräte, Instrumente und Möbel im medizinischärztlichen Bereich, namentlich in Zahnarztpraxen, im industriellen und gewerblichen Bereich, sowie in Haushalt, Küche, im Sanitärbereich und veterinärmedizinischen Bereich. Beispielsweise eignet sich das erfindungsgemäße Flächendesinfektionsmittel zum persönlichen Desinfizieren von Toiletten, Waschbecken, Sitzgelegenheiten oder dergleichen, die von einer Vielzahl von Leuten frequentiert werden, wie beispielsweise öffentliche Toiletten, insbesondere in Zügen, Schiffen und Flugzeugen.

Das erfindungsgemäße Flächendesinfektionsmittels wirkt desinfizierend und antistatisch, tötet Bakterien einschließlich Tuberkelbazillen, Hepatitis-B-Viren, HIV-Viren und Pilze auf Holz, Kunststoffen und sonstigen Oberflächen ab, ermöglicht die Reinigung von Kunststoffüberzügen, kunststoffüberzogenen Möbeln, ist dabei materialschonend sowohl bei Metallen, als auch bei Kunststoffen, wie Polyvinylchlorid, Polycarbonat, Acrylharzen und alkoholempfindlichen Lacken und besitzt darüber hinaus den Vorteil, daß die bevorzugt enthaltenen Bestandteile ungefährlich und biologisch leicht abbaubar sind.

Die folgenden Beispiele dienen der weiteren Erläuterung der Erfindung.

### Beispiel 1 - Flächendesinfektionsmittel-Konzentrat

In der folgenden Tabelle sind die Bestandteile dieses Konzentrates zusammengestellt:

| **Bestandteil** | **Gew.-%** |
|---|---|
| Glyoxal 40 %ig in Wasser | 68 |
| Natriumalkylsulfat (Sulfetal FH 40) | 22 |
| Kaliumperfluoroctoat 50 %ig | 6 |
| Bouquet Rose (Parfum) | 2 |
| 2-Hydroxy-4-methoxy-benzophenon | 1,2 |
| optischer Aufheller (Uvitex BAM) | 0,8 |
| | 100 |

Bei der Prüfung dieses Konzentrats gemäß den Richtlinien der Deutschen Gesellschaft für Hygiene und Mikrobiologie hat sich gezeigt, daß es nach dem Verdünnen mit destilliertem Wasser auf eine Konzentration von 7,5 % und darüber eine vollständige bakteriostatische und fungistatische Wirksamkeit gegenüber Staphylococcus aureus, Streptococcus faecalis, Escherichia coli, Proteus mirabilis, Pseudomonas aerugionosa und Candida albicans bewirkt. Eine bakterizide und fungizide Wirkung ergibt sich nach dem Auftragen dieses mit destilliertem Wasser auf eine Konzentration von 25% verdünnten Konzentrats bereits nach einer Einwirkungszeit von 5 Minuten.

Es hat sich weiterhin gezeigt, daß dieses Mittel auch gegen HIV und HBV-Viren wirksam ist.

### Beispiel 2

Durch Verdünnen des in Beispiel 1 angegebenen Konzentrats erhält man das nachfolgend angegebene Flächendesinfektions- und Reinigungsmittel in der Anwendungsform:

| **Bestandteil** | **Gew.-%** |
|---|---|
| Konzentrat von Beispiel 1 | 4,80 |
| Ethanol (96 %ig) | 25,00 |
| 1-Propanol rein | 35,00 |
| Destilliertes Wasser - salzfrei | 35,20 |
| | 100,00 |

Durch Nachstellen des pH-Wertes mit Perfluoroctansäure auf einen pH-Wert von 4 ergibt sich das anwendungsbereite Fertigprodukt. Dieses Fertigproduktwird zur Benutzung vorzugsweise mit Hilfe einer Sprühvorrichtung auf die zu behandelnden Oberflächen aufgesprüht und mit einem Lappen abgewischt, wodurch sich eine hervorragende Reinigungswirkung bei gleichzeitiger Desinfektion und Pflege der behandelten Kunststoffoberflächen ergibt. Es hat sich erwiesen, daß dieses Flächendesinfektions- und Reinigungsmittel auch bei besonders empfindlichen und zum Beispiel pastellfarben eingefärbten Kunstledern der Alterung und der Verfärbung vorbeugt, indem die durch die ständige Reinigung durch Alkohol und Tenside an der Oberfläche ausgelaugten Wirkstoff und Stabilisatoren in Form von in dem erfindungsgemäßen Mittel enthaltenen UV-Absorbern und oberflächenaktiven Mittel diese wieder in Form eines mikrodünnen Filmes aufgebracht werden, der bei jeder Reinigung nicht entfernt, sondern ständdig ergänzt wird.

Durch die Kombination des fluoraliphatischen Tensids mit den erfindungsgemäß bevorzugt eingesetzten UV-Absorbern und dem bevorzugt verwendeten bioziden Mittel Glyoxal ergibt sich ein äußerst aktives und preiswert herstellbares Mittel, welches eine bislang nicht gekannte Schonung der damit zu behandelnden empfindlichen Kunststoffoberflächen ermöglicht, namentlich der Kunststoffbezüge von Möbeln in Arztpraxen. Da die in diesem bevorzugten Mittel enthaltenen Rohstoffe in der Kosmetik hinreichend geprüft worden sind, sind auch keine Beeinträchtigungen des handhabenden Personals zu erwarten.

Die in diesem bevorzugten erfindungsgemäßen Mittel enthaltenen Wirkstoffe sind biologisch leicht abbaubar, gut zu entsorgen und damit umweltfreundlich. Darüber hinaus sind die enthaltenen Wirkstoffe farblos und in den Anwendungskonzentrationen geruchsfrei, so daß sich ein Flächendesinfektions- und Reinigungsmittel ergibt, welches eine überraschend vorteilhafte Kombination von wünschenswerten Anwendungseigenschaften aufweist.

## Patentansprüche

1. Flächendesinfektions- und Reinigungsmittel enthaltend ein biozides Mittel, ein fluoraliphatisches Tensid und ein Losungsmittel, **dadurch gekennzeichnet,** daß es als fluoraliphatisches Tensid mindestens eine Perfluoralkansäure mit 1 bis 10 Kohlenstoffatomen im Alkanrest und/oder ein Alkali- und/oder Ammoniumsalz davon, als biozides Mittel Glyoxal und/oder Glutaraldehyd und zusätzlich mindestens einen UV-Absorber enthält.

2. Mittel nach Anspruch 1, **dadurch gekennzeichnet,** daß es als Perfluoralkansäure eine Perfluoralkylcarbonsäure und/oder eine Perfluoralkylsulfonsäure enthält.

3. Mittel nach Anspruch 1, **dadurch gekennzeichnet,** daß es als Perfluoralkansäure Perfluorbuttersäure, Trifluormethansulfonsäure und/oder Perfluoroctansäure enthält.

4. Mittel nach mindestens einem der vorhergehenden Ansprüche, **dadurch gekennzeichnet,** daß es das fluoraliphatische Tensid in einer Konzentration von 0,001 bis 1 Gew.-%, vorzugsweise 0,01 bis 0,1 Gew.-% enthält.

5. Mittel nach mindestens einem der vorhergehenden Ansprüche, **dadurch gekennzeichnet,** daß es als Lösungsmittel Wasser und/oder mindestens einen wasserlöslichen Alkohol enthält.

6. Mittel nach Anspruch 5, **dadurch gekennzeichnet,** daß es als wasserlöslichen Alkohol Ethanol, Propanol und/oder Isopropanol enthält.

7. Mittel nach den Ansprüchen 5 und 6, **dadurch gekennzeichnet,** daß als Lösungsmittel eine Mischung aus destilliertem Wasser und mindestens einem der Alkohole Ethanol, Propanol und Isopropanol im Verhältnis 20:80 bis 80:20 enthalten ist.

8. Mittel nach mindestens einem der vorhergehenden Ansprüche, **dadurch gekennzeichnet,** daß es zusätzlich mindestens einen optischen Aufheller enthält.

9. Mittel nach Anspruch 8, **dadurch gekennzeichnet,** daß es als optischen Aufheller ein Benzotriazolderivat und/oder ein Stilbendisulfonsäurederivat enthält.

10. Mittel nach Anspruch 9, **dadurch gekennzeichnet,** daßes als optischen Aufheller 2-(2H-Benzotriazol-2-yl)-4-methyl-6-dodecyl-phenol, ein Reaktionsprodukt aus 3-(3-(2H-Benzotriazol-2-yl)-5-tert.butyl-4-hydroxyphenyl)-propionsäuremethylester und Polyethylenglykol 300 und/oder ein Bis(4,4'-triazinylamino)-stilben-2,2'-disulfonsäurederivat enthält.

11. Mittel nach den Ansprüchen 8 bis 10, **dadurch gekennzeichnet,** daß es den optischen Aufheller in einer Konzentration von 0,001 bis 3 Gew.-%, vorzugsweise 0.01 bis 0,5 Gew.-% enthält.

12. Mittel nach Anspruch 1, **dadurch gekennzeichnet,** daß es als UV-Absorber ein p-Aminobenzoesäurederivat, ein Benzimidazolderivat, ein Benzophenonderivat, ein Benzoxazolderivat, ein Campherderivat, ein Cumarinderivat, ein Dibenzoylmethanderivat,ein Gallussäurederivat,ein o-Hydroxybenzoesäurederivat, ein Zimtsäurederivat und/oder ein p-Methoxyzimtsäurederivat enthält.

13. Mittel nach Anspruch 12, **dadurch gekennzeichnet,** daß es als UV-Absorber 2-Hydroxy-4-methoxy-benzophenon, 2,4-Dihydroxy-benzophenon und/oder 2-Hydroxy-4-methoxy-benzophenon-5-sulfonsäure enthält.

14. Mittel nach den Ansprüchen 12 und 13, **dadurch gekennzeichnet,** daß es den UV-Absorber in einer Konzentration von 0.002 bis 5 Gew.-%, vorzugsweise 0.02 bis 1 Gew.-% enthält.

15. Mittel nach mindestens einem der vorhergehenden Ansprüche, **dadurch gekennzeichnet,** daßes zusätzlich mindestens ein nichtionisches oder anionisches Hilfs-Tensid enthält.

16. Mittel nach Anspruch 15, **dadurch gekennzeichnet,** daß es als nichtionisches Hilfs-Tensid ein Alkinol, ein Alkindiol und/oder ein Ethylenoxidaddukt davon enthält.

17. Mittel nach Anspruch 16, **dadurch gekennzeichnet,** daß es als Alkinol 3,5-Dimethyl-1-hexin-3-ol und als Alkindiol 2,4,7,9-Tetramethyl-5-decin-4,7-diol enthält.

18. Mittel nach Anspruch 15, **dadurch gekennzeichnet,** daß es als anionisches Tensid ein Alkylsulfat oder Alkylsulfonat mit 8 bis 18 Kohlenstoffatomen im Alkylrest enthält.

19. Mittel nach den Ansprüchen 15 bis 18, **dadurch gekennzeichnet,** daß es das Hilfs-Tensid in einer Konzentration von 0,001 bis 5 Gew.-%, vorzugsweise 0,1 bis 2,0 Gew.-% enthält.

20. Mittel nach mindestens einem der vorhergehenden Ansprüche, **dadurch gekennzeichnet,** daß es zusätzlich mindestens einen Parfumbestandteil enthält.

21. Mittel nach mindestens einem der vorhergehenden Ansprüche, **dadurch gekennzeichnet,** daß es einen pH-Wert von 2,5 bis 5,0 aufweist.

22. Mittel nach Anspruch 21, **dadurch gekennzeichnet,** daß es mit Ammoniak, Natriumhydroxid, Kaliumhydroxid, einem Morpholinderivat und/oder einem kurzkettigen Amin oder der Fluoralkansäure auf einen pH-Wert von 3,0 bis 4,5 eingestellt worden ist.

23. Mittel nach mindestens einem der vorhergehenden Ansprüche, **dadurch gekennzeichnet,** daß es in Form eines Konzentrats vorliegt, welches die angegebenen Bestandteile in einer solchen erhöhten Konzentration enthält, daß sich nach dem Verdünnen mit dem Lösungsmittel die angegebenen Konzentrationen ergeben.

## Claims

1. A disinfecting and cleaning agent for flat surfaces, said agent containing a biocide, a fluoroaliphatic surfactant and a solvent, **characterized** by containing at least one perfluoroalkanoic acid in which the alkane residue has 1 to 10 carbon atoms, and/or an alkali and/or ammonium salt thereof as the fluoroaliphatic surfactant, and glyoxal and/or glutaraldehyde as the biocide, and in addition at least one UV absorbent.

2. An agent according to claim 1, **characterized by** containing a perfluoroalkyl carboxylic acid and/or a perfluoroalkyl sulfonic acid as the perfluoroalkanoic acid.

3. An agent according to claim 1, **characterized by** containing perfluorobutyric acid, trifluoromethane sulfonic acid and/or perfluoro-octanoic acid as the perfluoroalkanoic acid.

4. An agent according to at least one of the preceding claims, **characterized by** containing the fluoroaliphatic surfactant at a concentration of from 0.001 to 1% by weight, preferably from 0.01 to 0.1% by weight.

5. An agent according to at least one of the preceding claims, **characterized by** containing water and/or at least one water-soluble alcohol as the solvent.

6. An agent according to claim 5, **characterized by** containing ethanol, propanol and/or isopropanol as the water-soluble alcohol.

7. An agent according to claims 5 and 6, characterized in that a mixture of distilled water and at least one of the alcohols ethanol, propanol and isopropanol at a ratio of from 20:80 to 80:20 is contained therein as the solvent.

8. An agent according to at least one of the preceding claims, **characterized by** containing in addition at least one optical brightener.

9. An agent according to claim 8, **characterized by** containing a benzotriazole derivative and/or a stilbene disulfonic acid derivative as the optical brightener.

10. An agent according to claim 9, **characterized by** containing 2-(2H-benzotriazole-2-yl)-4-methyl-6-dodecyl-phenol), a reaction product of 3-(3-(2H-benzotriazole-2-yl)-5-tert.butyl-4-hydroxyphenyl)-propionic acid methyl ester and polyethylene glycol 300 and/or a bis(4,4'-triazinylamino)-stilbene-2,2'-disulfonic acid derivative as the optical brightener.

11. An agent according to claims 8 to 10, **characterized by** containing the optical brightener at a concentration of from 0.001 to 3% by weight, preferably from 0.01 to 0.5% by weight.

12. An agent according to claim 1, **characterized by** containing a p-aminobenzoic acid derivative, a benzimidazole derivative, a benzophenone derivative, a benzoxazole derivative, a camphor derivative, a coumarin derivative, a dibenzoylmethane derivative, a gallic acid derivative, an o-hydroxybenzoic acid derivative, a cinnamic acid derivative and/or a p-methoxycinnamic acid derivative as the UV absorbent.

13. An agent according to claim 12, **characterized by** containing 2-hydroxy-4-methoxy-benzophenone, 2,4-dihydroxy-benzophenone and/or 2-hydroxy-4-methoxy-benzophenone-5-sulfonic acid as the UV absorbent.

14. An agent according to claims 12 and 13, **characterized by** containing the UV absorbent at a concentration of from 0.002 to 5% by weight, preferably from 0.02 to 1% by weight.

15. An agent according to at least one of the preceding claims, **characterized by** containing in addition at least one nonionic or anionic auxiliary surfactant.

16. An agent according to claim 15, **characterized by** containing an alkynol, an alkyne diol and/or an ethylene oxide adduct thereof as the nonionic auxiliary surfactant.

17. An agent according to claim 16, **characterized by** containing 3,5-dimethyl-1-hexine-3-ol as the alkynol and 2,4,7,9-tetramethyl-5-decine-4,7-diol as the ace diol.

18. An agent according to claim 15, **characterized by** containing an alkyl sulfate or alkyl sulfonate in which the alkyl residue has 8 to 18 carbon atoms as the anionic surfactant.

19. An agent according to claims 15 to 18, **characterized by** containing the auxiliary surfactant at a concentration of from 0.001 to 5% by weight, preferably from 0.1 to 2.0% by weight.

20. An agent according to at least one of the preceding claims, **characterized by** containing in addition at least one perfume component.

21. An agent according to one of the preceding claims, **characterized by** having a pH value of 2.5 to 5.0.

22. An agent according to claim 21, **characterized by** having been adjusted to a pH value of 3.0 to 4.5 by the use of ammonia, sodium hydroxide, potassium hydroxide, a morpholine derivative and/or a short-chain amine or the fluoroalkanoic acid.

23. An agent according to at least one of the preceding claims, **characterized by** being present in the form of a concentrate containing the stated components at such increased concentrations as to yield, on dilution with the solvent, the concentrations stated.

## Revendications

1. Agent désinfectant et de nettoyage contenant un agent biocide, un tensioactif aliphatique fluoré et un solvant, caractérisé en ce qu'il contient, en tant que tensioactif aliphatique fluoré, au moins un acide alkylé perfluoré ayant de 1 à 10 atomes de carbone dans la partie alkyle et/ou un sel d'ammonium et/ou de métal alcalin de celui-ci, du glyoxal et/ou du glutaraldéhyde en tant qu'agents biocides et, additionellement, au moins un agent absorvant les U.V.

2. Agent selon la revendication 1, caractérisé en ce qu'il contient, en tant qu'acide alkylé perfluoré, un acide alkylcarboxylique perfluoré et/ou un acide alkylsulfonique perfluoré.

3. Agent selon la revendication 1, caractérisé en ce qu'il contient, en tant qu'acide alkylé perfluoré, de l'acide butyrique perfluoré, de l'acide trifluorométhanesulfonique et/ou de l'acide octanoïque perfluoré.

4. Agent selon au moins une des revendications précédentes, caractérisé en ce qu'il contient l'agent tensioactif aliphatique fluoré en une concentration variant de 0,001 à 1% en poids, de préférence de 0,01 à 0,1% en poids.

5. Agent selon au moins une des revendications précédentes, caractérisé en ce qu'il contient, en tant que solvant, de l'eau et/ou au moins un alcool soluble dans l'eau.

6. Agent selon la revendication 5, caractérisé en ce qu'il contient, en tant qu'alcool soluble dans l'eau, de l'éthanol, du propanol et/ou de l'isopropanol.

7. Agent selon l'une des revendications 5 ou 6, caractérisé en ce qu'il contient, en tant que solvant, un mélange d'eau distillée et d'au moins un alcool choisi parmi l'éthanol, le propanol et l'isopropanol dans un rapport 20:80 à 80:20.

8. Agent selon au moins une des revendications précédentes, caractérisé en ce qu'il contient au moins un agent de blanchiment optique additionnel.

9. Agent selon la revendication 8, caractérisé en ce qu'il contient, en tant qu'agent de blanchiment optique, un dérivé du benzotriazole et/ou un dérivé de l'acide stilbènedisulfonique.

10. Agent selon la revendication 9, caractérisé en ce qu'il contient, en tant qu'agent de blanchiment optique, du 2-(2H-benzotriazol-2-yl)-4-méthyl-6-dodécyl-phénol, un produit de la réaction de l'ester méthylique de l'acide 3-(3-(2H-benzotriazol-2-yl)-5-ter-butyl-4-hydroxyphényl)-propionique et du polyéthyléneglycol 300 et/ou un dérivé de l'acide bis(4,4'-triazinylamino)-stilben-2,2'-disulfonique.

11. Agent selon les revendications 8 à 10, caractérisé en ce qu'il contient l'agent de blanchiment optique en une concentration variant de 0,001 à 3% en poids, de préférence de 0,01 à 0,5% en poids.

12. Agent selon la revendication 1, caractérisé en ce qu'il contient, en tant qu'agent absorbant les U.V., un dérivé de l'acide p-aminobenzoïque, un dérivé du benzimidazole, un dérivé de la benzophénone, un dérivé du benzoxazole, un dérivé du camphre, un dérivé de coumarine, un dérivé du dibenzoylméthane, un dérivé de l'acide gallique, un dérivé de l'acide hydroxybenzoïque, un dérivé de l'acide cinnamique et/ou un dérive de l'acide p-méthoxycinnamique.

13. Agent selon la revendication 12, caractérisé en ce qu'il contient, en tant qu'agent absorbant les U.V., de la 2-hydroxy-4-méthoxybenzophénone, de la 2,4-dihydroxybenzophénone et/ou de l'acide 2-hydroxy-4-méthoxybenzophénone-5-sulfonique.

14. Agent selon les revendications 12 et 13, caractérisé en ce qu'il contient l'agent absorbant les U.V. en une concentration variant de 0,002 à 5% en poids, de préférence de 0,02 à 1% en poids.

15. Agent selon au moins l'une des revendications précédentes, caractérisé en ce qu'il contient additionnellement au moins un tensioactif auxiliaire de type non ionique ou anionique.

16. Agent selon la revendication 15, caractérisé en ce qu'il contient, en tant qu'agent tensioactif auxiliaire non ionique, un alcynol, un alcyndiol et/ou un composé d'addition de celui-ci avec l'oxyde d'éthylène.

17. Agent selon la revendication 16, caractérisé en ce qu'il contient, en tant qu'alcynol, du 3,5-diméthyl-1-hexyn-3-ol et en tant qu'alcyndiol, du 2,4,7,9-tétraméthyl-5-décyn-4,7-diol.

18. Agent selon la revendication 15, caractérisé en ce qu'il contient, en tant qu'agent tensioactif anionique, un alkylsulfate ou alkylsulfonate présentant de 8 à 12 atomes de carbone.

19. Agent selon les revendications 15 à 18, caractérisé en ce qu'il contient l'agent tensioactif auxiliaire en une concentration de 0,001 à 5% en poids, de préférence de 0,1 à 2,0% en poids.

20. Agent selon au moins une des revendications précédentes, caractérisé en ce qu'il contient additionnellement au moins un constituant aromatisant.

21. Agent selon au moins une des revendications précédentes, caractérisé en ce qu'il présente un pH de 2,5 à 5,0.

22. Agent selon la revendication 21, caractérisé en ce que l'on ajuste le pH entre 3,0 et 4,5 au moyen d'ammoniac, d'hydroxyde de sodium, d'hydroxyde de potassium, d'un dérivé de la morpholine et/ou d'une amine à chaîne courte ou d'un acide alcanoïque fluoré.

23. Agent selon au moins une des revendications précédentes, caractérisé en ce qu'il se présente sous la forme d'un concentré contenant une concentration élevée desdits constituants, lequel conduit aux concentrations indiquées par dilution avec le solvant.
